# EUROPEAN PATENT APPLICATION

(11) **EP 4 807 633 A1**
(43) Date of publication of application: **16.09.2026**
(21) Application number: 26164289.6
(22) Date of filing: 12.03.2026
(51) Int. Cl.: G06N 10/20, G06N 10/70

(54) **COMPUTER PROGRAM, QUANTUM GATE NOISE MEASUREMENT METHOD, AND INFORMATION PROCESSING APPARATUS**

(30) Priority: 14.03.2025 US 202519080111
(71) Applicant: FUJITSU LIMITED, Kawasaki-shi, Kanagawa 211-8588 (JP)
(72) Inventor: ISHII, Masatoshi, Kawasaki-shi, 211-8588 (JP); KURITA, Tomochika, Santa Clara, 95054 (US)
(74) Representative: Haseltine Lake Kempner LLP

(57) **Abstract**

A processing unit generates a plurality of first quantum circuits each including a quantum gate serving as a target of noise measurement and a plurality of single-qubit gates that perform a twirling operation, the first quantum circuits differing from each other in the number of repetitions of the gate operation of the quantum gate. The processing unit generates, for each of the plurality of first quantum circuits, a plurality of second quantum circuits that are quantum circuits that implement the same unitary operation and differ from each other in the number of first single-qubit gates among the plurality of single-qubit gates. The processing unit causes a quantum computer to execute the plurality of second quantum circuits, and estimates noise of the quantum gate in a state where no first single-qubit gate is included, by extrapolation based on the execution results of the plurality of second quantum circuits.

## Description

### FIELD

The embodiments discussed herein relate to a computer program, a quantum gate noise measurement method, and an information processing apparatus.

### BACKGROUND

In noisy intermediate-scale quantum computers (NISQ) using currently available superconducting or trapped-ion qubits, the error rate is approximately 1%.

Various error diagnosis techniques for quantum computers have been proposed, including quantum state tomography, quantum process tomography, and randomized benchmarking (RB). Among these, the RB has an advantage of separately measuring state preparation and measurement (SPAM) errors and the fidelity of quantum gates. Cycle benchmarking (CB) is a quantum gate noise measurement method based on the RB.

The CB is a technique of defining a set of designated quantum gates as one cycle and evaluating the accuracy of the quantum operations by repeating the cycle. The CB enables the measurement of both the total probability of errors in the cycle and the probability of a specific Pauli error occurring during the cycle. See, for example, the following documents.
Japanese National Publication of International Patent Application No. 2023-501752
U.S. Patent Application Publication No. 2024/0177043

Noise measurement of a quantum gate may be performed in determining the fidelity of the quantum gate. When noise of a certain quantum gate is measured, a twirling operation is performed by randomly applying a single-qubit gate such as a Pauli gate, in order to randomize anisotropic noise introduced by a gate sequence including the quantum gate and statistically equalize the error rate.

However, there may be a case where noise of a single-qubit gate used for the twirling operation inhibits accurate measurement of the noise of the quantum gate to be measured. This may provide inaccurate fidelity.

### SUMMARY

In one aspect, the present disclosure aims to reduce the impact of noise of a single-qubit gate in noise measurement of a quantum gate.

According to one aspect, there is provided a computer program that causes a computer to perform a process including: generating a plurality of first quantum circuits each including a quantum gate serving as a target of noise measurement and a plurality of single-qubit gates for performing a twirling operation, the plurality of first quantum circuits differing from each other in the number of repetitions of a gate operation of the quantum gate; generating a plurality of second quantum circuits for each of the plurality of first quantum circuits, the plurality of second quantum circuits being quantum circuits that implement a same unitary operation and differ from each other in the number of first single-qubit gates among the plurality of single-qubit gates; causing a quantum computer to execute the plurality of second quantum circuits; and estimating noise of the quantum gate in a state where no first single-qubit gate is included, by extrapolation based on execution results of the plurality of second quantum circuits.

### BRIEF DESCRIPTION OF DRAWINGS

FIG. 1 illustrates an example of a quantum gate noise measurement method according to a first embodiment;
FIG. 2 illustrates an example of a configuration of a quantum computing system;
FIG. 3 illustrates an example of hardware of a computer used in the present embodiment;
FIG. 4 illustrates an example of functions of a classical computer;
FIG. 5 illustrates an example of a plurality of quantum circuits for CB;
FIG. 6 illustrates an example of native gate conversion;
FIG. 7 illustrates an example of simulation results of noise;
FIG. 8 illustrates an example of a method of increasing the number of SX gates;
FIG. 9 illustrates an estimation example of a method 1;
FIG. 10 illustrates an example of simulation results of noise used for the estimation of the method 1 (with m = 6);
FIG. 11 illustrates an example of simulation results of noise used for the estimation of the method 1 (with m = 12);
FIG. 12 illustrates an example of simulation results of noise used for the estimation of method 1 (with m = 18);
FIG. 13 illustrates the relationship between the expectation value and the number of repetitions in a state where the number of SX gates is zero;
FIG. 14 illustrates an example of simulation results of the infidelity of an R_{ZX}(θ) gate with respect to each Pauli decay term in the method 1;
FIG. 15 illustrates an estimation example of a method 2;
FIG. 16 illustrates an example of simulation results of noise used for the estimation of the method 2 (with the number of SX gates = 2);
FIG. 17 illustrates an example of simulation results of noise used for the estimation of the method 2 (with the number of SX gates = 4);
FIG. 18 illustrates an example of simulation results of noise used for the estimation of the method 2 (with the number of SX gates = 6);
FIG. 19 illustrates the relationship between the fidelity and the number of SX gates;
FIG. 20 illustrates an example of simulation results of the infidelity of the R_{ZX}(θ) gate with respect to each Pauli decay term in the method 2; and
FIG. 21 is a flowchart illustrating an example procedure for a quantum gate noise measurement method according to the present embodiment.

### DESCRIPTION OF EMBODIMENTS

Hereinafter, embodiments will be described with reference to the drawings. A plurality of embodiments may be combined unless they exclude each other.

### [First Embodiment]

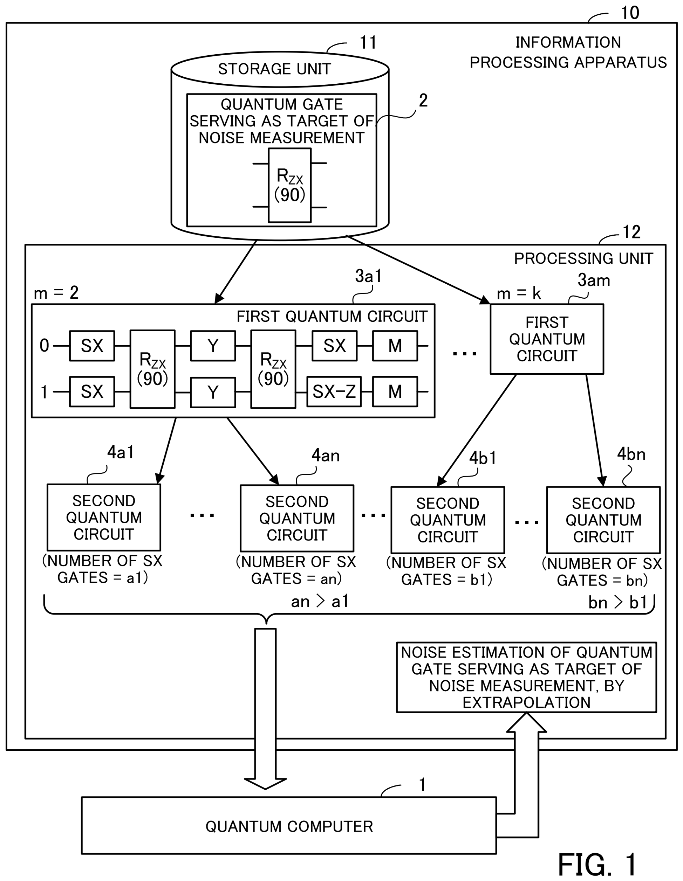

FIG. 1 illustrates an example of a quantum gate noise measurement method according to a first embodiment. FIG. 1 illustrates an information processing apparatus 10 for implementing the quantum gate noise measurement method. The information processing apparatus 10 is able to implement the quantum gate noise measurement method according to the first embodiment by, for example, executing a quantum gate noise measurement program.

The information processing apparatus 10 includes a storage unit 11 and a processing unit 12. The storage unit 11 is, for example, a memory or a storage device included in the information processing apparatus 10. The processing unit 12 is, for example, a processor included in the information processing apparatus 10. The information processing apparatus 10 may include a plurality of processors. Among a plurality of processes that are performed by the information processing apparatus 10, different processes may be performed by different processors.

The storage unit 11 stores information on a quantum gate 2 that is a target of noise measurement. For example, a two-qubit gate is used as the quantum gate 2. Two-qubit gates are more complicated in control than single-qubit gates and thus tend to have a higher error rate than single-qubit gates. Therefore, it is preferable to accurately measure the noise of the two-qubit gates.

An example of a two-qubit gate used as the quantum gate 2 serving as the target of noise measurement is an R_{ZX}(90) gate. In FIG. 1, the R_{ZX}(90) gate is labeled as "R_{ZX}(90)". The R_{ZX}(90) gate is an R_{ZX} gate with a rotation angle θ = 90°. The R_{ZX} gate may be referred to as an echoed cross-resonance (ECR) gate. The R_{ZX} gate is generally used as an entanglement gate in a qubit device with superconducting qubits. The gate operation of the R_{ZX}(θ) gate is expressed by the following Equation (1). ${R}_{ZX} \left(θ\right) = \left[\begin{matrix}cos \left(\frac{θ}{2}\right) & - i sin \left(\frac{θ}{2}\right) & 0 & 0 \\ - i sin \left(\frac{θ}{2}\right) & cos \left(\frac{θ}{2}\right) & 0 & 0 \\ 0 & 0 & cos \left(\frac{θ}{2}\right) & i sin \left(\frac{θ}{2}\right) \\ 0 & 0 & i sin \left(\frac{θ}{2}\right) & cos \left(\frac{θ}{2}\right)\end{matrix}\right]$

Many qubit devices with superconducting qubits are able to implement the R_{ZX}(90) gate with θ = 90° as a native gate. The R_{ZX}(90) gate may be referred to as a "ZX(90) gate".

The processing unit 12 generates a plurality of first quantum circuits 3a1 to 3am. Each of the first quantum circuits 3a1 to 3am includes the quantum gate 2 serving as the target of noise measurement and a plurality of single-qubit gates that perform a twirling operation. The first quantum circuits 3a1 to 3am differ from each other in the number of repetitions (m) of the gate operation of the quantum gate 2. The number of repetitions (m) may be exponentially increased, for example, m = 2, 6, 12, 18 in the first quantum circuits 3a1 to 3am so as to enable easy observation of noise accumulation in CB.

In addition, in the example of FIG. 1, the first quantum circuits 3a1 to 3am are quantum circuits that each perform gate operations on two qubits: one qubit having an initial state of 0 and the other qubit having an initial state of 1. These first quantum circuits 3a1 to 3am may also be referred to as a plurality of quantum circuits for CB.

Examples of the plurality of single-qubit gates that perform the twirling operation include an SX gate, a Y gate, and a Z gate. The SX gate is a quantum gate that performs a gate operation of rotating the state of a qubit by 90° around the X-axis of the Bloch sphere. The SX gate may be labeled as an X(90) gate. The Y gate is a quantum gate that performs a gate operation of rotating the state of a qubit by 180° around the Y axis of the Bloch sphere. The Z gate is a quantum gate that performs a gate operation of rotating the state of a qubit by 180° around the Z axis of the Bloch sphere.

In FIG. 1, the first quantum circuit 3a1 includes SX gates, Y gates, and an SX-Z gate that is a combination of an SX gate and a Z gate. An SX gate is labeled as "SX", a Y gate is labeled as "Y", and an SX-Z gate is labeled as "SX-Z". The twirling operation is performed by these single-qubit gates. Note that "M" represents a qubit measurement operation.

In the first quantum circuit 3a1, the number of repetitions is m = 2. The first quantum circuit 3a1 includes two R_{ZX}(90) gates, which are an example of the quantum gate 2 serving as the target of noise measurement, thereby achieving m = 2. In the first quantum circuit 3am, the number of repetitions is m = k. Although not illustrated, the first quantum circuit 3am includes k R_{ZX}(90) gates to achieve m = k.

An arbitrary single-qubit gate is convertible into five single-qubit gates that are native gates, according to the hardware of a quantum computer 1. The quantum computer 1 includes, for example, a qubit device with superconducting qubits or trapped-ion qubits.

Noise measurement using CB is performed by causing the quantum computer 1 to execute each of the first quantum circuits 3a1 to 3am a plurality of times while randomly changing a single-qubit gate. However, in this case, there is a possibility of failing to appropriately measure the noise of the quantum gate 2 serving as the target of noise measurement due to noise caused by single-qubit gates used for performing the twirling operation.

Unlike the quantum process tomography, the CB has an advantage of separately measuring SPAM errors and the fidelity of a quantum gate. However, as the number of repetitions (m) increases, the number of single-qubit gates increases, and the measurement is more susceptible to noise caused by the single-qubit gates.

Therefore, the processing unit 12 further generates, for each of the first quantum circuits 3a1 to 3am, a plurality of second quantum circuits that are equivalent to each other and differ from each other in the number of first single-qubit gates among the plurality of single-qubit gates. Note that quantum circuits being "equivalent to each other" means that the quantum circuits implement the same unitary operation.

In the example of FIG. 1, n second quantum circuits 4a1 to 4an are generated for the first quantum circuit 3a1. For example, in the second quantum circuit 4a1, the number of SX gates, which are an example of single-qubit gates, is a1. In the second quantum circuit 4an, the number of SX gates, which are an example of single-qubit gates, is an. Here, an > a1. The number of SX gates per gate sequence may differ one by one among the second quantum circuits 4a1 to 4an.

Similarly, n second quantum circuits 4b1 to 4bn are generated for the first quantum circuit 3am. In the second quantum circuit 4b1, the number of SX gates, which are an example of single-qubit gates, is b1. In the second quantum circuit 4bn, the number of SX gates, which are an example of single-qubit gates, is bn. Here, bn > b1. The number of SX gates per gate sequence may differ one by one among the second quantum circuits 4b1 to 4bn.

An arbitrary single-qubit gate is often converted into a gate sequence of five native gates: an R_{Z}(θ) gate including a Z gate, an SX gate, an R_{Z}(θ) gate, an SX gate, and an R_{Z}(θ) gate. In many cases, R_{Z}(θ) gates do not need actual gate operations on qubits. Therefore, it is desirable to remove the impact of noise caused by the SX gates, in which the number of actual gate operations on qubits tends to be larger than that of the R_{Z}(θ) gates, in order to appropriately measure the noise of the quantum gate 2 serving as the target of noise measurement.

The processing unit 12 causes the quantum computer 1 to execute the plurality of second quantum circuits 4a1 to 4an, ..., and 4b1 to 4bn. Then, the processing unit 12 estimates the noise of the quantum gate 2 serving as the target of noise measurement in a state in which no first single-qubit gate is included (the SX gates in the above example), by extrapolation based on the execution results.

In a plurality of second quantum circuits that are equivalent to each other and differ from each other in the number of first single-qubit gates, noise increases as the number of single-qubit gates increases. Utilizing this property, the processing unit 12 is able to estimate the noise of the quantum gate 2 in the state where the number of first single-qubit gates is zero, by extrapolation. Thus, it is possible to subtract the noise component of the first single-qubit gates from the entire noise. The magnitude of the noise is estimated, for example, by an error from an expectation value = 1.

In each second quantum circuit, the noise increases as the number (m) of repetitions of the gate operation of the quantum gate 2 increases. Therefore, the noise of one quantum gate 2, i.e., m = 0 is estimated from the estimated values of the noise of the quantum gates 2 obtained for the numbers of repetitions m in the state where the number of first single-qubit gates is zero.

As described above, the quantum gate noise measurement method of the first embodiment is able to reduce the impact of noise of the first single-qubit gate in the noise measurement of the quantum gate 2. As a result, the measurement accuracy of the noise of the quantum gate 2 is improved.

Further, since the measurement accuracy of the noise of the quantum gate 2 is improved, it is expected that the quantum gate 2 is useful in designing a quantum circuit for solving an actual problem or in optimizing the quantum circuit.

### [Second Embodiment]

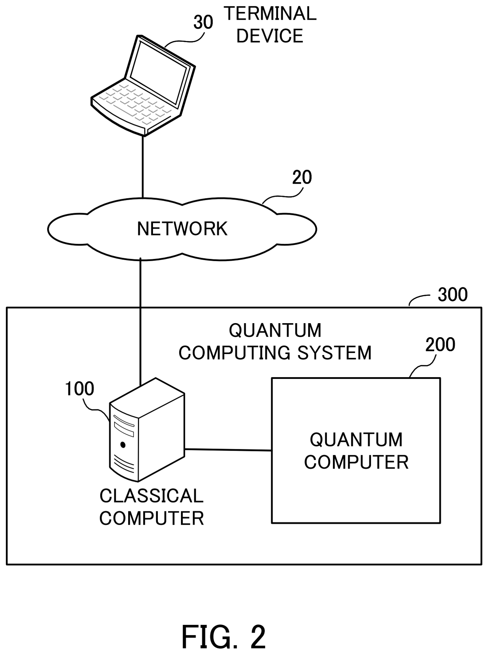

FIG. 2 illustrates an example of a configuration of a quantum computing system. The quantum computing system 300 is, for example, a computer system that performs computation using the principle of quantum mechanics. The quantum computing system 300 includes a classical computer 100 and a quantum computer 200. The classical computer 100 is a von Neumann computer. The quantum computer 200 is a non-von Neumann type of quantum gate-based computer that performs quantum computation by causing quantum gates to act on qubits.

As illustrated in FIG. 2, a terminal device 30 may be connected to the classical computer 100 via a network 20. The terminal device 30 is a computer used by a user who requests quantum computation from the quantum computing system 300. The classical computer 100 may receive designation of a quantum gate serving as a target of noise measurement from the terminal device 30. Further, the classical computer 100 may receive designation of a Pauli decay term to be measured, designation of the number of repetitions of the gate operation of the quantum gate serving as the target of noise measurement in a quantum circuit for CB, and others. The Pauli decay term is a decay term caused by Pauli errors. A Pauli error of a two-qubit gate may be represented by a tensor product of Pauli matrices.

For example, the classical computer 100 instructs the quantum computer 200 to perform gate operations on qubits according to a quantum computation request received from the terminal device 30. The classical computer 100 obtains the measurement result of each qubit from the quantum computer 200.

The quantum computer 200 performs gate operations on qubits in accordance with an instruction from the classical computer 100. The quantum computer 200 transmits a measurement result (corresponding to an execution result of a quantum circuit) obtained by measuring the states of the qubits after the gate operations of the quantum gates, to the classical computer 100.

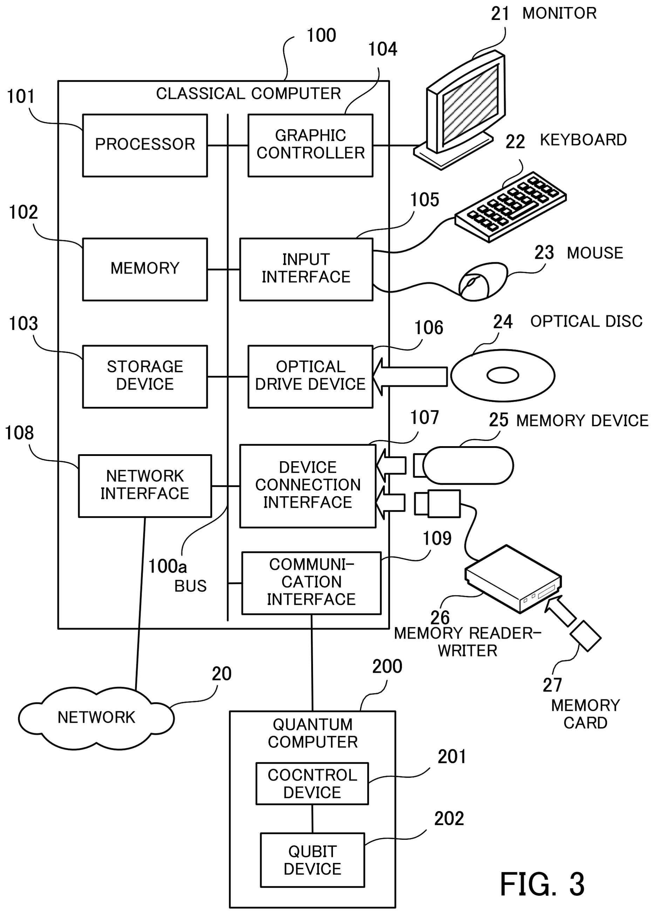

FIG. 3 illustrates an example of hardware of a computer used in the present embodiment. The entire classical computer 100 is controlled by a processor 101. A memory 102 and a plurality of peripheral devices are connected to the processor 101 via a bus 100a.

The classical computer 100 may be a multiprocessor system having a plurality of processors. A set of a plurality of processors in the multiprocessor system may be referred to as the processor 101. The processor 101 may be referred to as processor circuitry. Each of the plurality of processors is able to perform some or all of the plurality of processes performed by the classical computer 100. Two or more processes among a plurality of related processes may be performed by different processors.

The processor 101 is, for example, a central processing unit (CPU), a micro processing unit (MPU), or a digital signal processor (DSP). At least a part of the functions implemented by the processor 101 executing the program may be implemented by an electronic circuit such as an application specific integrated circuit (ASIC) or a programmable logic device (PLD).

The memory 102 is used as a main memory device of the classical computer 100. The memory 102 temporarily stores at least part of an operating system (OS) program and application programs to be executed by the processor 101. The memory 102 also stores various data used for processing by the processor 101. As the memory 102, for example, a volatile semiconductor memory device such as a random access memory (RAM) is used.

The peripheral devices connected to the bus 100a include a storage device 103, a graphic controller 104, an input interface 105, an optical drive device 106, a device connection interface 107, a network interface 108, and a communication interface 109.

The storage device 103 electrically or magnetically writes and reads data to and from a built-in storage medium. The storage device 103 is used as an auxiliary storage device of the classical computer 100. The storage device 103 stores OS programs, application programs, and various types of data. As the storage device 103, for example, a hard disk drive (HDD) or a solid state drive (SSD) may be used.

The graphic controller 104 is an arithmetic device that performs image processing. The graphic controller 104 is, for example, a graphics processing unit (GPU). A monitor 21 is connected to the graphic controller 104. The graphic controller 104 displays an image on the screen of the monitor 21 in accordance with a command from the processor 101. Examples of the monitor 21 include a display device using organic electro luminescence (EL) and a liquid crystal display device. When, for example, a GPU is used as the graphic controller 104, the graphic controller 104 is also able to execute complex numerical calculation such as matrix calculation.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may also be used. Examples of other pointing devices include touch panels, tablets, touch pads, and track balls.

The optical drive device 106 reads data recorded on an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R), a CD-rewritable (CD-RW), or the like.

The device connection interface 107 is a communication interface for connecting peripheral devices to the classical computer 100. For example, a memory device 25 and a memory reader-writer 26 may be connected to the device connection interface 107. The memory device 25 is a storage medium having a function of communicating with the device connection interface 107. The memory reader-writer 26 is a device that writes data to a memory card 27 or reads data from the memory card 27. The memory card 27 is a card-type storage medium.

The network interface 108 is connected to the network 20. The network interface 108 transmits and receives data to and from other computers or communication devices via the network 20. The network interface 108 is, for example, a wired communication interface that is connected to a wired communication device such as a switch or a router by a cable. Alternatively, the network interface 108 may be a wireless communication interface that is communicatively connected to a wireless communication device such as a base station or an access point by radio waves.

The communication interface 109 is connected to the quantum computer 200. The communication interface 109 communicates with the quantum computer 200. The communication interface 109 transmits, for example, a quantum gate operation command based on a quantum circuit to the quantum computer 200. The communication interface 109 receives the execution result of the quantum circuit from the quantum computer 200.

The classical computer 100 is able to implement the processing functions of the second embodiment by the hardware as described above. The information processing apparatus 10 described in the first embodiment is also able to be implemented by hardware similar to that of the classical computer 100 illustrated in FIG. 3.

The classical computer 100 implements the processing functions of the second embodiment, for example, by executing a program recorded on a computer-readable storage medium. The program describing the processing contents to be executed by the classical computer 100 may be recorded in various storage media. For example, a program to be executed by the classical computer 100 may be stored in the storage device 103. The processor 101 loads at least part of the program from the storage device 103 into the memory 102 and executes the program. The program to be executed by the classical computer 100 may be recorded in a portable storage medium such as the optical disc 24, the memory device 25, or the memory card 27. The program stored in the portable storage medium becomes executable after being installed in the storage device 103 under the control of the processor 101, for example. Alternatively, the processor 101 is able to read the program directly from the portable storage medium and execute the program.

The quantum computer 200 includes a control device 201 and a qubit device 202. The control device 201 performs gate operations on qubits in the qubit device 202 according to an instruction from the classical computer 100. For example, the control device 201 performs gate operations on qubits by applying microwaves of a predetermined frequency to the qubits.

The qubit device 202 has a plurality of qubits. The qubit device 202 includes, for example, superconducting qubits, trapped-ion qubits, cold atom qubits, or the like. The qubit device 202 may also be referred to as a quantum processing unit (QPU).

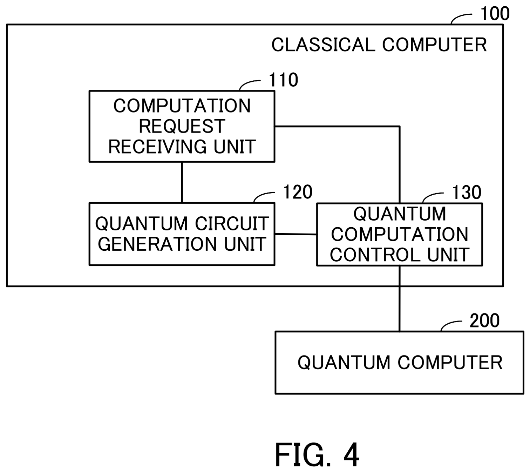

FIG. 4 illustrates an example of functions of the classical computer. The classical computer 100 includes a computation request receiving unit 110, a quantum circuit generation unit 120, and a quantum computation control unit 130.

The computation request receiving unit 110 receives a computation request for quantum computation for performing a noise measurement of a certain quantum gate. The computation request may include a Pauli decay term to be measured, the number of repetitions of the gate operation of a quantum gate serving as a target of noise measurement in a quantum circuit for CB, the number of times of randomly changing a single-qubit gate, and others. The computation request receiving unit 110 may receive the computation request from the terminal device 30. The computation request receiving unit 110 may obtain a computation request input using the keyboard 22 or the mouse 23 illustrated in FIG. 3.

The computation request receiving unit 110 requests the quantum circuit generation unit 120 to generate a quantum circuit corresponding to a designated quantum computation. In addition, when receiving an estimation result of noise or fidelity from the quantum computation control unit 130, the computation request receiving unit 110 may transmit the estimation result to the terminal device 30.

The quantum circuit generation unit 120 generates a plurality of quantum circuits for executing the quantum computation designated by the computation request receiving unit 110. The quantum circuit generation unit 120 sequentially transmits the plurality of generated quantum circuits to the quantum computation control unit 130.

The quantum computation control unit 130 instructs the quantum computer 200 to execute all the quantum circuits received from the quantum circuit generation unit 120. Every time the gate operation of each quantum circuit is completed, the quantum computation control unit 130 receives the measurement result of the states of qubits, which is an execution result of the quantum circuit, from the quantum computer 200.

The quantum computation control unit 130 estimates the noise of the quantum gate serving as the target of noise measurement, from the measurement results obtained from the plurality of quantum circuits. The quantum computation control unit 130 may estimate the fidelity of the quantum gate serving as the target of noise measurement, based on the estimation result of the noise. The quantum computation control unit 130 transmits the estimation result of the noise or the fidelity to the computation request receiving unit 110.

The function of each element illustrated in FIG. 4 may be implemented by causing a computer to execute a program module corresponding to the element, for example.

### (Example of Generating Quantum Circuits for CB)

Hereinafter, an example of generating quantum circuits for CB by the quantum circuit generation unit 120 will be described. The following describes an example in which an R_{ZX}(90) gate, which is a native gate of a qubit device including superconducting qubits, is used as a quantum gate serving as a target of noise measurement.

First, the quantum circuit generation unit 120 generates a plurality of quantum circuits for CB, each including the R_{ZX}(90) gate and a plurality of single-qubit gates that perform a twirling operation. The plurality of quantum circuits for CB differ from each other in the number of repetitions (m) of the gate operation of the R_{ZX}(90) gate. The plurality of quantum circuits for CB correspond to the plurality of first quantum circuits in the first embodiment.

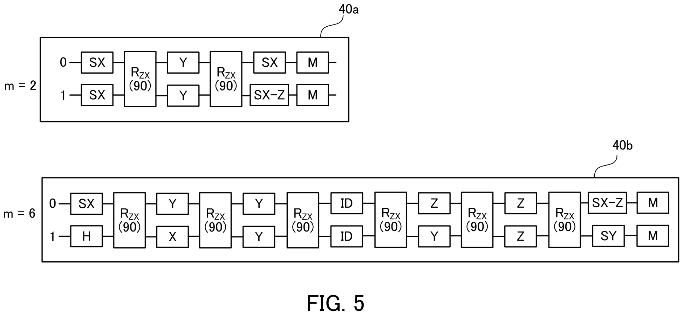

FIG. 5 illustrates an example of a plurality of quantum circuits for CB. FIG. 5 illustrates, as examples, a quantum circuit 40a with m = 2 and a quantum circuit 40b with m = 6. Each of the quantum circuits 40a and 40b is a quantum circuit that performs gate operations on two qubits, i.e., a qubit having an initial state of 0 and a qubit having an initial state of 1.

The quantum circuit 40a includes two SX gates and one Y gate as single-qubit gates that act on the qubit having the initial state of 0. Further, the quantum circuit 40a includes one SX gate, one Y gate, and one SX-Z gate, which is a combination of an SX gate and a Z gate, as single-qubit gates that act on the qubit having the initial state of 1. In FIG. 5, the SX gate is labeled as "SX", the Y gate is labeled as "Y", and the SX-Z gate is labeled as "SX-Z".

The quantum circuit 40a includes two R_{ZX}(90) gates, which are two-qubit gates serving as a target of noise measurement. In FIG. 5, the R_{ZX}(90) gate is labeled as "R_{ZX}(90)". Note that "M" represents a qubit measurement operation.

In the quantum circuit 40a, the two Y gates are quantum gates that perform a twirling operation. The SX gate that first acts on the qubit having the initial state of 0 is a quantum gate that performs the twirling operation and performs a change of basis according to a Pauli decay term to be measured. Similarly, in the quantum circuit 40a, the SX gate that first acts on the qubit having the initial state of 1 is a quantum gate that performs the twirling operation and performs a change of basis according to the Pauli decay term to be measured.

In the quantum circuit 40a, the SX gate that last acts on the qubit having the initial state of 0 before the measurement operation has functions of performing the twirling operation and performing a change of basis according to the Pauli decay term to be measured. Similarly, in the quantum circuit 40a, the SX-Z gate that last acts on the qubit having the initial state of 1 before the measurement operation has functions of performing the twirling operation and performing a change of basis according to the Pauli decay term to be measured.

The quantum circuit 40b includes an SX gate, two Y gates, two Z gates, one SX-Z gate, and one idle gate as single-qubit gates that act on a qubit having an initial state of 0. In FIG. 5, the Z gate is labeled as "Z" and the idle gate is labeled as "ID". The idle gate puts a certain qubit in an idle state in a specific cycle in which a gate operation is performed on the other qubit. Further, the quantum circuit 40b includes one H gate, one X gate, two Y gates, one idle gate, one Z gate, and one SY gate as single-qubit gates that act on a qubit having an initial state of 1. In FIG. 5, the H gate is labeled as "H", the X gate is labeled as "X", and the SY gate is labeled as "SY".

The H gate is a quantum gate that performs a gate operation of setting the state of a qubit to a superposition state of 0 and 1. The H gate is also called a Hadamard gate. The X gate is a quantum gate that performs a gate operation of rotating the state of a qubit by 180° around the X axis of the Bloch sphere. The SY gate is a quantum gate that performs a gate operation of rotating the state of a qubit by 90° around the Y axis of the Bloch sphere. In addition, the quantum circuit 40b includes six R_{ZX}(90) gates, which are two-qubit gates serving as the target of noise measurement.

In the quantum circuit 40b, the four Y gates, one X gate, two idle gates, and three Z gates are quantum gates that perform a twirling operation. In addition, the SX gate that first acts on the qubit having the initial state of 0 has a function of performing the twirling operation and performing a change of basis according to a Pauli decay term to be measured. Similarly, in the quantum circuit 40b, the H gate that first acts on the qubit having the initial state of 1 has a function of performing the twirling operation and performing a change of basis according to the Pauli decay term to be measured.

In the quantum circuit 40b, the SX-Z gate that last acts on the qubit having the initial state of 0 before the measurement operation has a function of performing the twirling operation and performing a change of basis according to the Pauli decay term to be measured. Similarly, in the quantum circuit 40b, the SY gate that last acts on the qubit having the initial state of 1 before the measurement operation has a function of performing the twirling operation and performing a change of basis according to the Pauli decay term to be measured.

When the CB is executed, a single-qubit gate that performs a twirling operation is randomly changed, and a plurality of quantum circuits are generated for a quantum circuit having each number of repetitions (m).

An arbitrary single-qubit gate is often converted into a gate sequence of five native gates: an R_{Z}(θ) gate, an SX gate, an R_{Z}(θ) gate, an SX gate, and an R_{Z}(θ) gate.

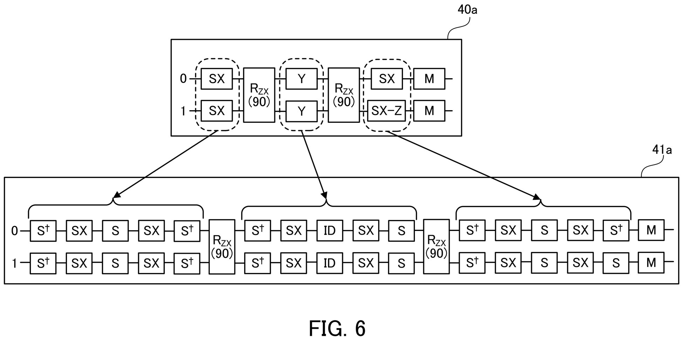

FIG. 6 illustrates an example of native gate conversion. FIG. 6 illustrates an example of a quantum circuit 41a obtained as a result of performing the native gate conversion on the quantum circuit 40a illustrated in FIG. 5.

The SX gate is converted into a gate sequence of five native gates: an S^{†} gate, an SX gate, an S gate, an SX gate, and an S^{†} gate. The S gate is a single-qubit gate that rotates the phase of a qubit having a state of 1 by π/2 around the Z-axis. The S^{†} gate is a single-qubit gate that rotates the phase of a qubit having a state of 1 by -π/2 around the Z axis. In FIG. 6, the S gate is labeled as "S", and the S^{†} gate is labeled as "S^{†}". The S gate and the S^{†} gate are types of R_{Z}(θ) gate.

The Y gate is converted into a gate sequence of five native gates: an S^{†} gate, an SX gate, an idle gate, an SX gate, and an S gate. The SX-Z gate is converted into a gate sequence of five native gates: an S^{†} gate, an SX gate, an S gate, an SX gate, and an S gate.

If a plurality of quantum circuits for CB obtained by the native gate conversion as described above are used as they are, there is a possibility of failing to measure the noise of the R_{ZX}(90) gate appropriately due to the noise of a single-qubit gate used for performing a twirling operation.

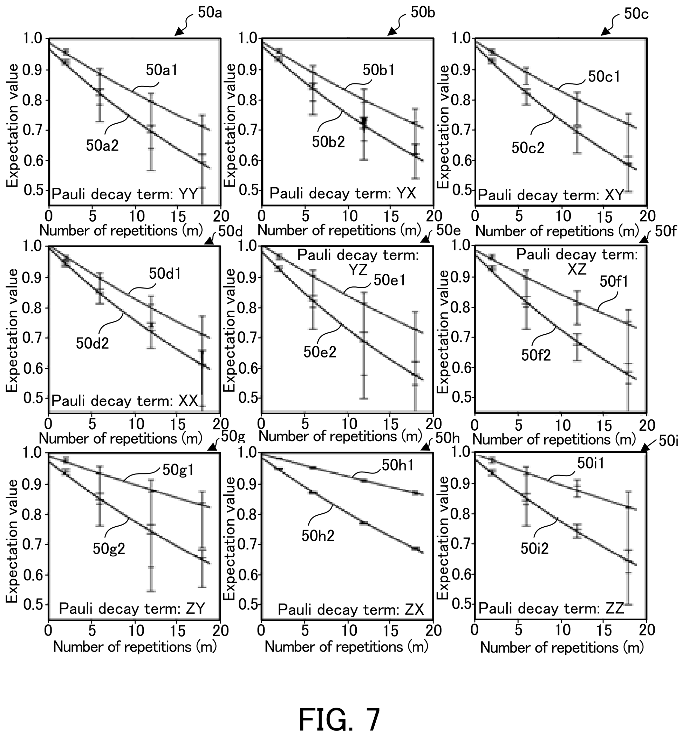

FIG. 7 illustrates an example of simulation results of noise. A simulation result 50a is a simulation result of noise related to YY that is one of Pauli decay terms. YY represents a tensor product of the Pauli matrices Y. A simulation result 50b is a simulation result of noise related to YX that is one of the Pauli decay terms. YX represents a tensor product of the Pauli matrix Y and the Pauli matrix X. A simulation result 50c is a simulation result of noise related to XY that is one of the Pauli decay terms. XY represents a tensor product of the Pauli matrix X and the Pauli matrix Y. A simulation result 50d is a simulation result of noise related to XX that is one of the Pauli decay terms. XX represents a tensor product of the Pauli matrices X. A simulation result 50e is a simulation result of noise related to YZ that is one of the Pauli decay terms. YZ represents a tensor product of the Pauli matrix Y and the Pauli matrix Z. A simulation result 50f is a simulation result of noise related to XZ that is one of the Pauli decay terms. XZ represents a tensor product of the Pauli matrix X and the Pauli matrix Z. A simulation result 50g is a simulation result of noise related to ZY that is one of the Pauli decay terms. ZY represents a tensor product of the Pauli matrix Z and the Pauli matrix Y. A simulation result 50h is a simulation result of noise related to ZX that is one of the Pauli decay terms. ZX represents a tensor product of the Pauli matrix Z and the Pauli matrix X. A simulation result 50i is a simulation result of noise related to ZZ that is one of the Pauli decay terms. ZZ represents a tensor product of the Pauli matrices Z.

In the graphs of the simulation results 50a to 50i, the horizontal axis represents the number of repetitions (m) of the gate operation of the R_{ZX}(90) gate, and the vertical axis represents the expectation value. In addition, in the simulation results 50a to 50i, approximate curves 50a1 to 50i1 are curves obtained by fitting the simulation results of the expectation value in the case where no noise has occurred from the single-qubit gate, according to an equation E = A · r^{m}, where E denotes an expectation value, A denotes a SPAM error, and r denotes fidelity. Approximate curves 50a2 to 50i2 are curves obtained by fitting the simulation results of the expectation value in the case where noise of the single-qubit gate and noise of the R_{ZX}(90) gate are superimposed, according to the equation E = A · r^{m}.

It is found from the simulation results 50a to 50i that the noise due to the single-qubit gate affects the noise measurement results in the form of a decrease in the expectation value and the fidelity.

To address this, in the quantum gate noise measurement method according to the present embodiment, the following process is performed in order to reduce the impact of the noise of the single-qubit gate. The quantum circuit generation unit 120 generates, for each of a plurality of quantum circuits that differ from each other in the number of repetitions (m), a plurality of quantum circuits that are equivalent to each other and differ from each other in the number of first single-qubit gates among a plurality of single-qubit gates. This is because, by causing the quantum computer 200 to execute the plurality of quantum circuits that differ from each other in the number of first single-qubit gates, it is possible to estimate the noise of R_{ZX}(90) in the case where no noise occurs from the first single-qubit gate, by extrapolation based on the execution results.

In the case where L quantum circuits are generated for each of M quantum circuits with a different number of repetitions m, by randomly changing a single-qubit gate, a plurality of quantum circuits that differ from each other in the number of single-qubit gates are generated for each of the M × L quantum circuits.

As described above, an arbitrary single-qubit gate is often converted into a gate sequence of five native gates: an R_{Z}(θ) gate including a Z gate, an SX gate, an R_{Z}(θ) gate, an SX gate, and an R_{Z}(θ) gate. The R_{Z}(θ) gates often do not need actual gate operations on qubits. Therefore, in order to appropriately measure the noise of the R_{ZX}(90), it is desirable to remove the impact of the noise of the SX gates that tend to perform more actual gate operations on qubits than the R_{Z}(θ) gates.

Therefore, for example, by increasing the number of SX gates as the first single-qubit gates, the quantum circuit generation unit 120 generates a plurality of quantum circuits that are equivalent to each other and differ from each other in the number of SX gates as follows.

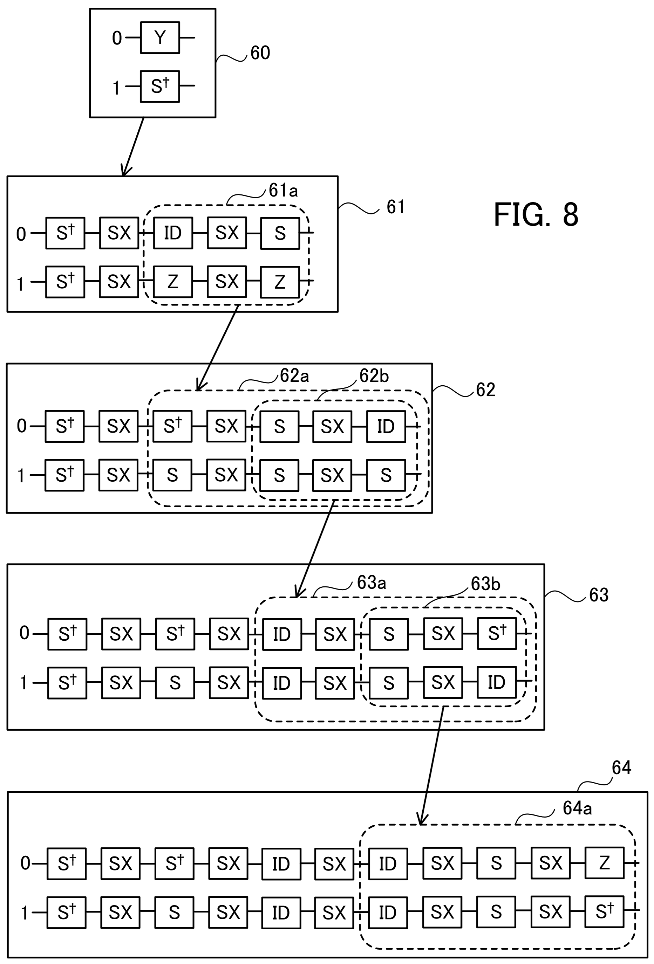

FIG. 8 illustrates an example of a method of increasing the number of SX gates. FIG. 8 illustrates an example of generating equivalent circuits 61 to 64 that are equivalent to a quantum circuit 60 including a Y gate that acts on a qubit having an initial state of 0 and an S^{†} gate that acts on a qubit having an initial state of 1.

As described earlier, an arbitrary single-qubit gate is convertible into a gate sequence of five native gates: an R_{Z}(θ) gate, an SX gate, an R_{Z}(θ) gate, an SX gate, and an R_{Z}(θ) gate. Therefore, the quantum circuit generation unit 120 converts the Y gate into a gate sequence of five native gates: for example, an S^{†} gate, an SX gate, an idle gate, an SX gate, and an S gate, as described above. In addition, the quantum circuit generation unit 120 converts the S^{†} gate into a gate sequence of five native gates: for example, an S^{†} gate, an SX gate, a Z gate, an SX gate, and a Z gate. As a result, the equivalent circuit 61 as illustrated in FIG. 8 is generated. The equivalent circuit 61 includes two SX gates in the gate sequence for the qubit having the initial state of 0, and also includes two SX gates in the gate sequence for the qubit having the initial state of 1.

The quantum circuit generation unit 120 generates an equivalent circuit 62 by converting a gate group 61a including the last three quantum gates counted from the end of each gate sequence of the equivalent circuit 61 into a gate group 62a with an increased number of SX gates. Specifically, the quantum circuit generation unit 120 integrates a gate sequence of the last three quantum gates counted from end of each gate sequence of the equivalent circuit 61 into one single-qubit gate. Then, the quantum circuit generation unit 120 converts the single-qubit gate obtained by the integration into a gate sequence of an R_{Z}(θ) gate, an SX gate, an R_{Z}(θ) gate, an SX gate, and an R_{Z}(θ) gate.

In the example of FIG. 8, the gate sequence of the idle gate, the SX gate, and the S gate in the gate group 61a is converted into a gate sequence of an S^{†} gate, an SX gate, an S gate, an SX gate, and an idle gate in the gate group 62a by the above conversion after the integration. The gate sequence of the Z gate, the SX gate, and the Z gate in the gate group 61a is converted into a gate sequence of an S gate, an SX gate, an S gate, an SX gate, and an S gate in the gate group 62a by the above conversion after the integration. As a result, the number of SX gates is increased by one in each gate sequence.

In the same manner as above, the quantum circuit generation unit 120 generates an equivalent circuit 63 by converting a gate group 62b including the last three quantum gates counted from the end of each gate sequence of the equivalent circuit 62 into a gate group 63a with an increased number of SX gates. In the example of FIG. 8, the gate sequence of the S gate, the SX gate, and the idle gate in the gate group 62b is converted into a gate sequence of an idle gate, an SX gate, an S gate, an SX gate, and an S^{†} gate in the gate group 63a by the above-described conversion after integration. The gate sequence of the S gate, the SX gate, and the S gate in the gate group 62a is converted into a gate sequence of an idle gate, an SX gate, an S gate, an SX gate, and an idle gate in the gate group 63a by the above-described conversion after integration. As a result, the number of SX gates is increased by one in each gate sequence.

In the same manner as above, the quantum circuit generation unit 120 generates an equivalent circuit 64 by converting a gate group 63b including the last three quantum gates counted from the end of each gate sequence of the equivalent circuit 63 into a gate group 64a with an increased number of SX gates. In the example of FIG. 8, the gate sequence of the S gate, the SX gate, and the S^{†} gate of the gate group 63b is converted into a gate sequence of an idle gate, an SX gate, an S gate, an SX gate, and an Z gate in the gate group 64a by the above-described conversion after integration. The gate sequence of the S gate, the SX gate, and the idle gate of the gate group 63b is converted into a gate sequence of an idle gate, an SX gate, an S gate, an SX gate, and an S^{†} gate in the gate group 64a by the above-described conversion after integration. As a result, the number of SX gates is increased by one in each gate sequence.

In this way, the quantum circuit generation unit 120 is able to generate the equivalent circuits 61 to 64 that are equivalent to each other, by repeatedly performing the integration and conversion to increase the number of SX gates one by one in each gate sequence for a single qubit.

In this connection, the quantum circuit generation unit 120 may integrate the last three quantum gates counted from the head of each gate sequence into one single-qubit gate and then convert the single-qubit gate into a gate sequence of an R_{Z}(θ) gate, an SX gate, an R_{Z}(θ) gate, an SX gate, and an R_{Z}(θ) gate.

Next, examples of estimating the noise and fidelity of an R_{ZX}(θ) gate by two methods will be described.

### (Estimation Example of Noise and Fidelity (Method 1))

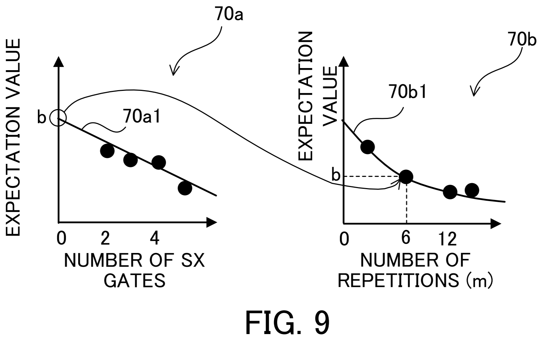

FIG. 9 illustrates an estimation example of a method 1. FIG. 9 illustrates a measurement result 70a representing the relationship between the expectation value and the number of SX gates, which is obtained by executing a plurality of quantum circuits in the quantum computer 200, and an estimation result 70b of the expectation value in the case where no noise occurs from a single-qubit gate. In the graph representing the measurement result 70a, the horizontal axis represents the number of SX gates, and the vertical axis represents the expectation value. In the graph representing the estimation result 70b, the horizontal axis represents the number of repetitions (m), and the vertical axis represents the expectation value. The expectation value is the expectation value of the probability distribution of the qubit state. The ideal expectation value without noise is 1, but the expectation value decreases from 1 due to noise.

In the measurement result 70a, the relationship between the expectation value and the number of SX gates in the case where the number of repetitions (m) is m = 6 is plotted. On the basis of the measurement result 70a, the quantum computation control unit 130 estimates the expectation value in a state where the number of SX gates is zero, by linear extrapolation. The quantum computation control unit 130 estimates the expectation value in the state where the number of SX gates is zero, by fitting the measurement result 70a to an approximate straight line 70a1 expressed by an equation E = n · r + b, where E denotes the expectation value, r denotes the fidelity, and b denotes the expectation value in the state where the number of SX gates is zero.

The quantum computation control unit 130 estimates, for each of the other quantum circuits with different numbers of repetitions (m), the expectation value in the state where the number of SX gates is zero in the same manner, so as to obtain the estimation result 70b. On the basis of the estimation result 70b, the quantum computation control unit 130 estimates the expectation value in the state of m = 0, by exponential extrapolation. The quantum computation control unit 130 estimates the expectation value in the state of m = 0 by fitting the estimation result 70b to an approximate curve 70b1 expressed by an equation E = A · r^{m}, where A denotes a SPAM error. For example, the difference between the expectation value and 1 indicates a result of estimating noise of one R_{ZX}(θ) gate. Further, the quantum computation control unit 130 is also able to obtain the fidelity (r in the equation E = A · r^{m}) of one R_{ZX}(θ) gate from the approximate curve 70b1.

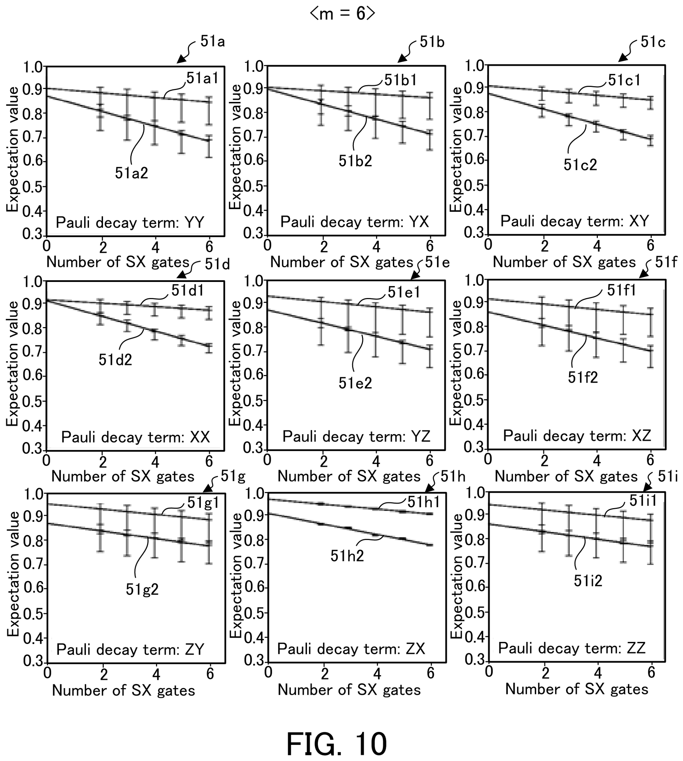

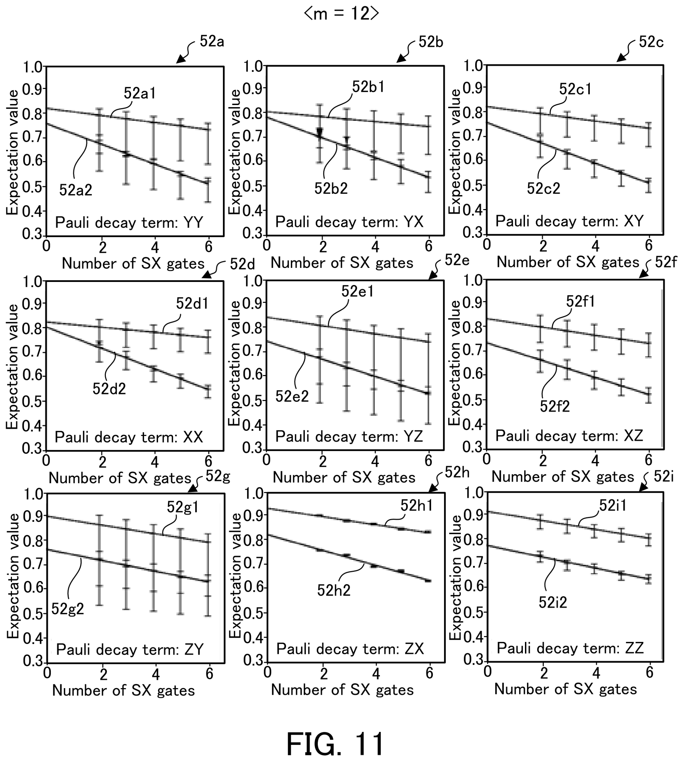

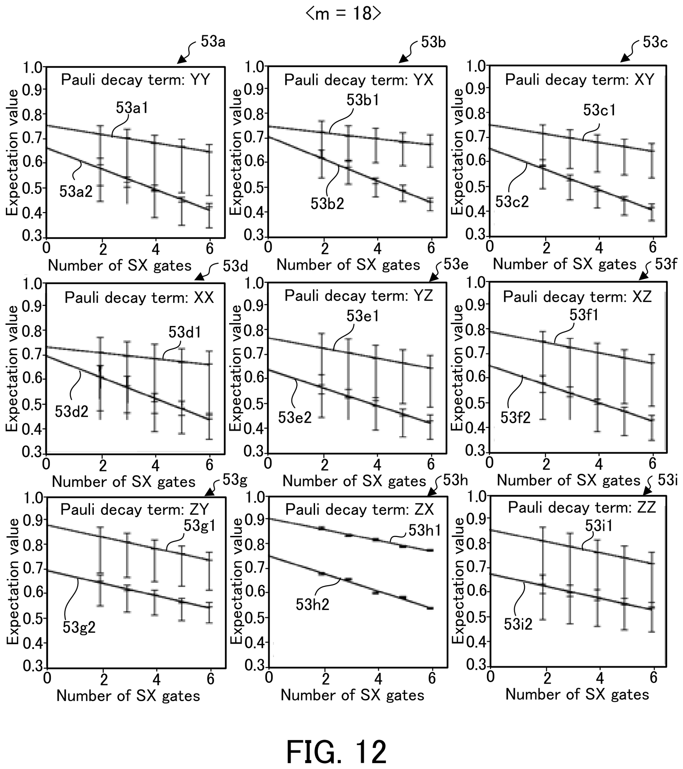

FIGS. 10, 11, and 12 illustrate examples of simulation results of noise used for the estimation of the method 1. FIG. 10 illustrates the simulation results in the case of m = 6, FIG. 11 illustrates the simulation results in the case of m = 12, and FIG. 12 illustrates the simulation results in the case of m = 18. The number of times (L) of randomly changing a single-qubit gate is set to L = 30.

In FIGS. 10 to 12, simulation results 51a, 52a, and 53a indicate simulation results of noise related to YY, which is one of the Pauli decay terms. Simulation results 51b, 52b, and 53b indicate simulation results of noise related to YX, which is one of the Pauli decay terms. Simulation results 51c, 52c, and 53c indicate simulation results of noise related to XY, which is one of the Pauli decay terms. Simulation results 51d, 52d, and 53d indicate simulation results of noise related to XX, which is one of the Pauli decay terms. Simulation results 51e, 52e, and 53e indicate simulation results of noise related to YZ, which is one of the Pauli decay terms. Simulation results 51f, 52f, and 53f indicate simulation results of noise related to XZ, which is one of the Pauli decay terms. Simulation results 51g, 52g, and 53g indicate simulation results of noise related to ZY, which is one of the Pauli decay terms. Simulation results 51h, 52h, and 53h indicate simulation results of noise related to ZX, which is one of the Pauli decay terms. Simulation results 51i, 52i, and 53i indicate simulation results of noise related to ZZ, which is one of the Pauli decay terms.

In the graph of each simulation result, the horizontal axis represents the number of SX gates, and the vertical axis represents the expectation value. In addition, in each simulation result, approximate straight lines 51a1 to 51i1, 52a1 to 52i1, and 53a1 to 53i1 are lines obtained by linearly approximating the simulation results of the expectation value in the case where no noise occurs from the single-qubit gate. Approximate straight lines 51a2 to 51i2, 52a2 to 52i2, and 53a2 to 53i2 are lines obtained by linearly approximating the simulation results of the expectation value in the case where noise of the single-qubit gate and noise of the R_{ZX}(90) gate are superimposed.

From each approximate straight line 51a2 to 51i2, 52a2 to 52i2, and 53a2 to 53i2, it is possible to estimate an expectation value in a state where the number of SX gates is zero, by linear extrapolation.

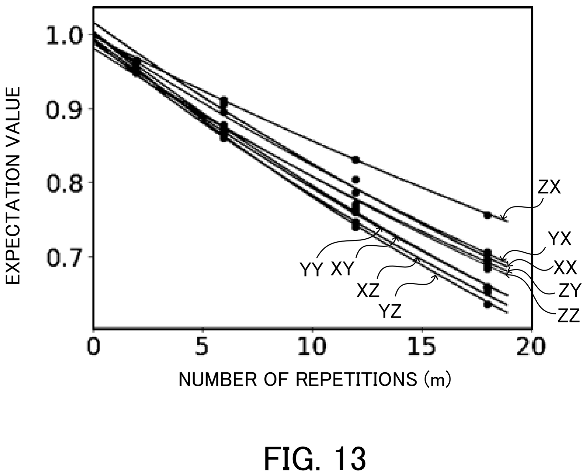

FIG. 13 illustrates the relationship between the expectation value and the number of repetitions in a state where the number of SX gates is zero. The relationship between the expectation value and the number of repetitions is illustrated for each Pauli decay term.

As described above, the fidelity r of the R_{ZX}(θ) gate may be estimated by fitting the relationship between the expectation value and the number of repetitions to the approximate curve expressed by the equation E = A · r^{m}.

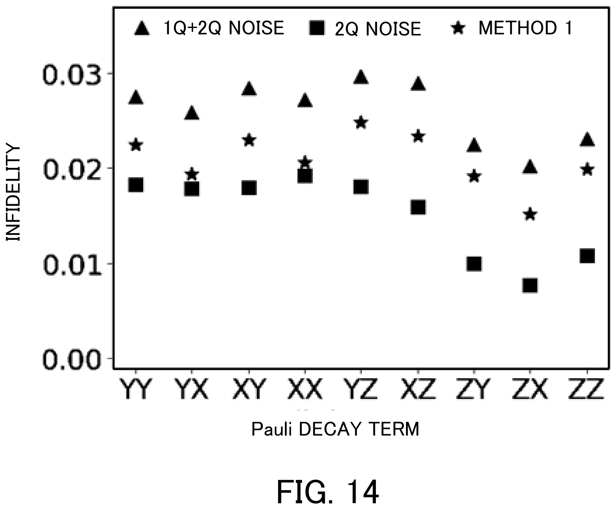

FIG. 14 illustrates an example of simulation results of the infidelity of the R_{ZX}(θ) gate with respect to each Pauli decay term in the method 1. The horizontal axis represents the nine Pauli decay terms, and the vertical axis represents the infidelity. The lower the infidelity, the higher the fidelity. Note that FIG. 14 also illustrates a result (denoted as "2Q noise") in the case where no noise occurs from the single-qubit gate and a result (denoted as "1Q + 2Q noise") in the case where noise of the single-qubit gate and noise of the R_{ZX}(90) gate are superimposed.

As illustrated in FIG. 14, the infidelity with respect to each Pauli decay term, estimated with the estimation method of the method 1, is closer to the result in the case where no noise occurs from the single-qubit gate than the result in the case where noise of the single-qubit gate and noise of the R_{ZX}(90) gate are superimposed. That is, it is found that the impact of the noise of the single-qubit gate is reduced.

### (Estimation Example of Noise and Fidelity (Method 2))

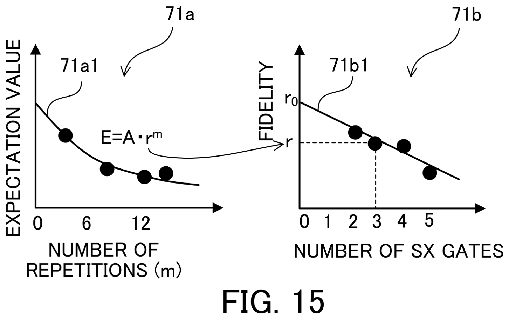

FIG. 15 illustrates an estimation example of a method 2. FIG. 15 illustrates a measurement result 71a representing the relationship between the expectation value and the number of repetitions, which is obtained by executing a plurality of quantum circuits in the quantum computer 200, and an estimation result 71b of fidelity. In the graph representing the measurement result 71a, the horizontal axis represents the number of repetitions (m), and the vertical axis represents the expectation value. In the graph representing the estimation result 71b, the horizontal axis represents the number of SX gates, and the vertical axis represents the fidelity.

In the measurement result 71a, the relationship between the expectation value and the number of repetitions (m) in the case where the number of SX gates is three is plotted. The quantum computation control unit 130 is able to estimate the fidelity r in the case where the number of SX gates is three, by fitting the measurement result 71a to an approximate curve 71a1 expressed by the equation E = A · r^{m}.

The quantum computation control unit 130 estimates the fidelity for each of the other quantum circuits with different numbers of SX gates in the same manner, so as to obtain the estimation result 70b. On the basis of the estimation result 71b, the quantum computation control unit 130 obtains an approximate straight line 71b1. Then, the quantum computation control unit 130 estimates the fidelity r₀ in the state where the number of SX gates is zero, by linear extrapolation.

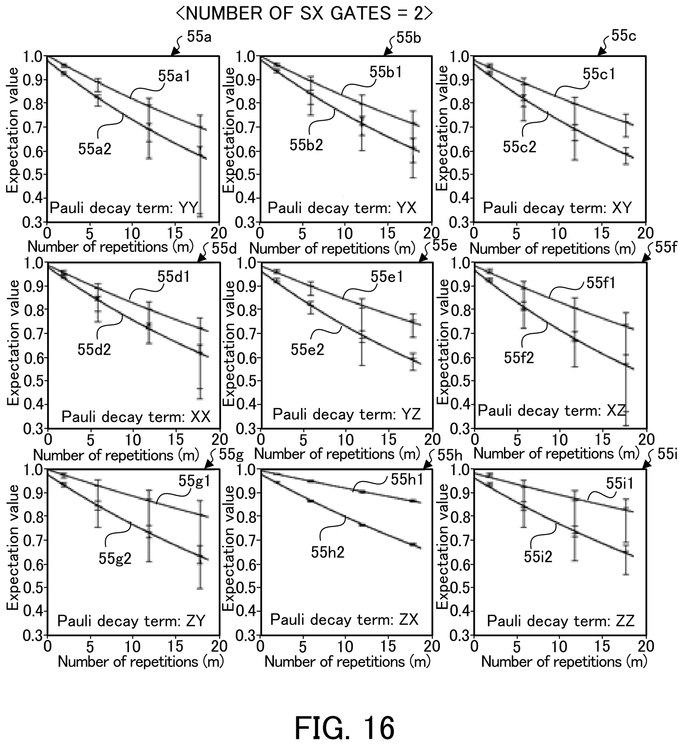

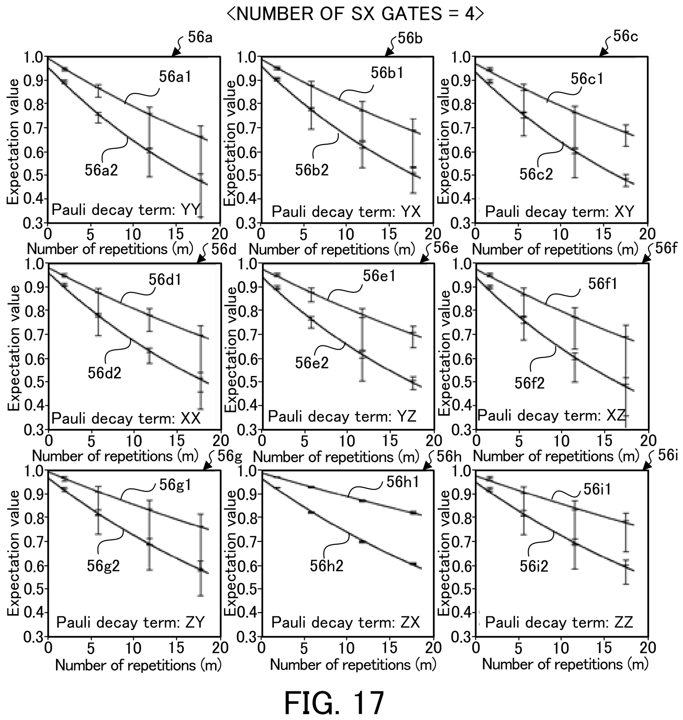

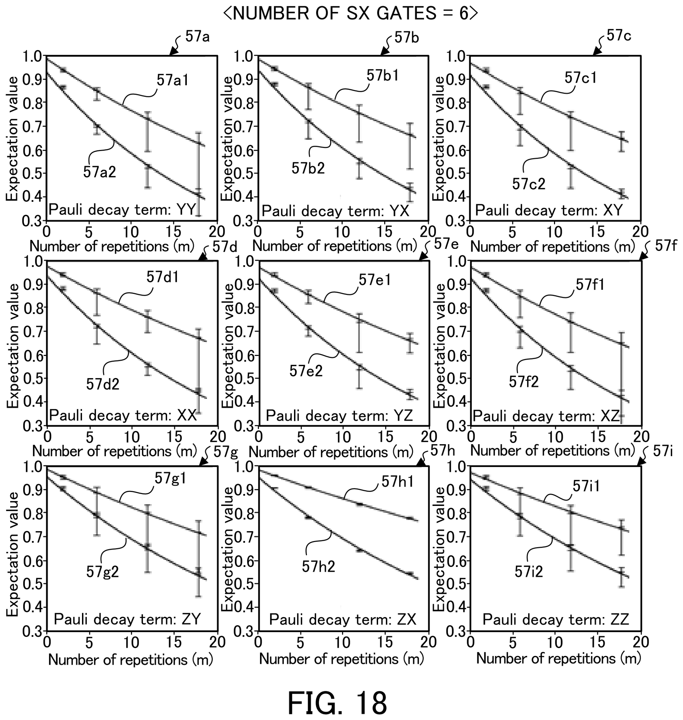

FIGS. 16, 17, and 18 illustrate examples of simulation results of noise used for the estimation of the method 2. FIG. 16 illustrates the simulation results in the case where the number of SX gates is two, FIG. 17 illustrates the simulation results in the case where the number of SX gates is four, and FIG. 18 illustrates the simulation results in the case where the number of SX gates is six.

In FIGS. 16 to 18, simulation results 55a, 56a, and 57a indicate simulation results of noise related to YY, which is one of the Pauli decay terms. Simulation results 55b, 56b, and 57b indicate simulation results of noise related to YX, which is one of the Pauli decay terms. Simulation results 55c, 56c, and 57c indicate simulation results of noise related to XY, which is one of the Pauli decay terms. Simulation results 55d, 56d, and 57d indicate simulation results of noise related to XX, which is one of the Pauli decay terms. Simulation results 55e, 56e, and 57e indicate simulation results of noise related to YZ, which is one of the Pauli decay terms. Simulation results 55f, 56f, and 57f indicate simulation results of noise related to XZ, which is one of the Pauli decay terms. Simulation results 55g, 56g, and 57g indicate simulation results of noise related to ZY, which is one of the Pauli decay terms. Simulation results 55h, 56h, and 57h indicate simulation results of noise related to ZX, which is one of the Pauli decay terms. Simulation results 55i, 56i, and 57i indicate simulation results of noise related to ZZ, which is one of the Pauli decay terms.

In the graph of each simulation result, the horizontal axis represents the number of repetitions (m), and the vertical axis represents the expectation value. In addition, in each simulation result, approximate curves 55a1 to 55i1, 56a1 to 56i1, and 57a1 to 57i1 approximate the simulation results of the expectation value in the case where no noise occurs from the single-qubit gate. Approximate curves 55a2 to 55i2, 56a2 to 56i2, and 57a2 to 57i2 approximate the simulation results of the expectation value in the case where noise of the single-qubit gate and noise of the R_{ZX}(90) gate are superimposed.

From each approximate curve 55a2 to 55i2, 56a2 to 56i2, and 57a2 to 57i2 expressed by the equation E = A · r^{m}, it is possible to estimate the fidelity of the R_{ZX}(θ) gate for each value of the number of SX gates.

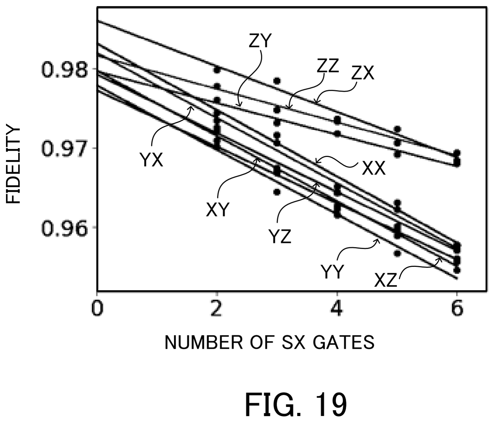

FIG. 19 illustrates the relationship between the fidelity and the number of SX gates. The relationship between the fidelity and the number of SX gates is illustrated for each Pauli decay term.

As illustrated in FIG. 19, the quantum computation control unit 130 obtains an approximate straight line from the fidelity of the R_{ZX}(θ) gate estimated with each value of the number of SX gates, and estimates the fidelity in the state where the number of SX gates is zero, by linear extrapolation for each Pauli decay term.

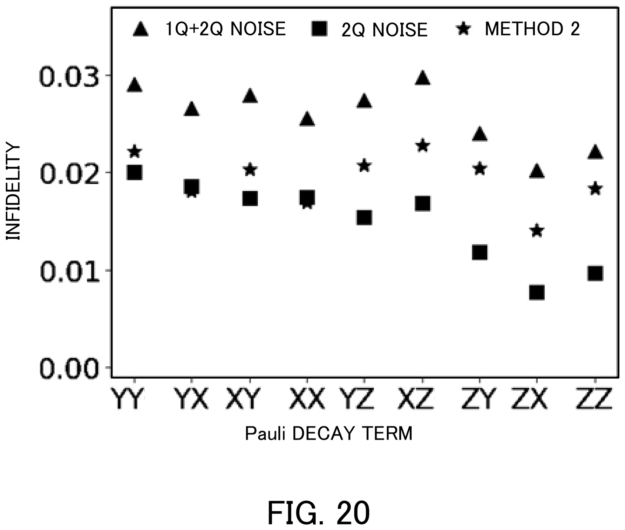

FIG. 20 illustrates an example of simulation results of the infidelity of the R_{ZX}(θ) gate with respect to each Pauli decay term in the method 2. The horizontal axis represents the nine Pauli decay terms, and the vertical axis represents the infidelity. Note that FIG. 20 also illustrates a result (denoted as "2Q noise") in the case where no noise occurs from the single-qubit gate and a result (denoted as "1Q + 2Q noise") in the case where noise of the single-qubit gate and noise of the R_{ZX}(90) gate are superimposed.

As illustrated in FIG. 20, the infidelity with respect to each Pauli delay term, estimated with the estimation method of the method 2, is closer to the result in the case where no noise occurs from the single-qubit gate than the result in the case where noise of the single-qubit gate and noise of the R_{ZX}(90) gate are superimposed. That is, it is found that the impact of the noise of the single-qubit gate is reduced.

### (Quantum Gate Noise Measurement Procedure)

Lastly, a procedure for the quantum gate noise measurement method according to the present embodiment is summarized in a flowchart.

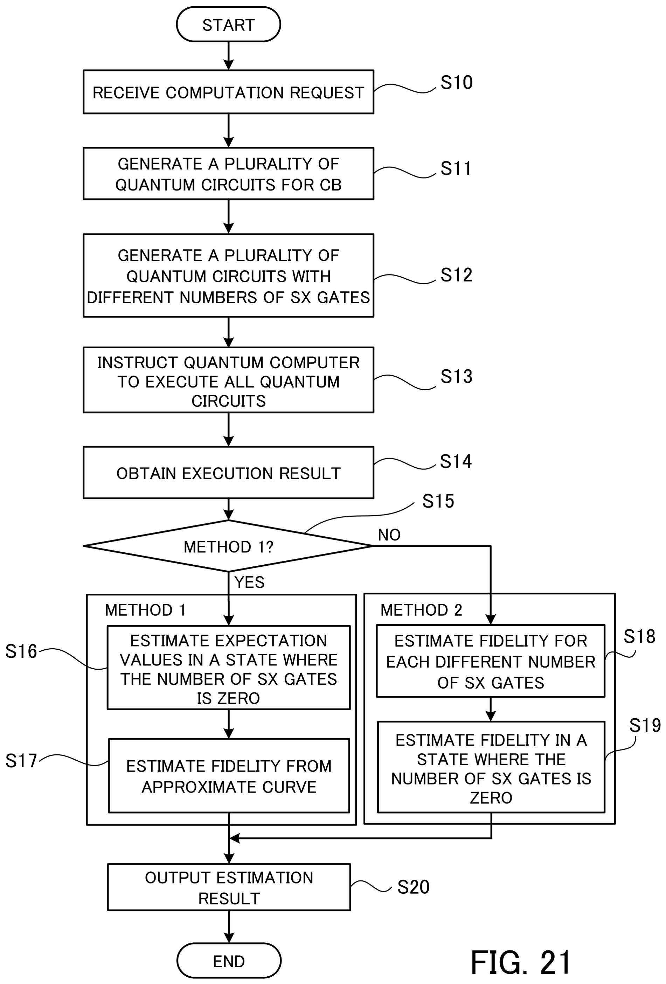

FIG. 21 is a flowchart illustrating an example procedure for the quantum gate noise measurement method according to the present embodiment.

Step S10: The computation request receiving unit 110 receives a computation request of quantum computation for performing a noise measurement of an R_{ZX}(θ) gate. The computation request includes, for example, a Pauli decay term to be measured, the number of repetitions (m) of the gate operation of the R_{ZX}(θ) gate, and the number of times of randomly changing a single-qubit gate. In the following description, it is assumed that the number of Pauli decay terms to be measured is taken as P, the number of types of the number of repetitions (m) is taken as M (for example, four types of m = 2, 6, 12, and 18), and the number of times of randomly changing a single-qubit gate is taken as L.

Step S11: The quantum circuit generation unit 120 generates a plurality of (P × M × L) quantum circuits for CB, each including the R_{ZX}(90) gate and a plurality of single-qubit gates that perform a twirling operation.

Step S12: The quantum circuit generation unit 120 generates, for each of the plurality of quantum circuits for CB generated in step S11, a plurality of quantum circuits that are equivalent to each other and differ from each other in the number of SX gates. That is, P × M × L × N_{SX} quantum circuits are generated, where N_{SX} denotes the number of types of the number of SX gates.

Step S13: The quantum computation control unit 130 instructs the quantum computer 200 to execute all the quantum circuits received from the quantum circuit generation unit 120.

Step S14: Every time the gate operation of a quantum circuit is completed, the quantum computation control unit 130 obtains the execution result of the quantum circuit from the quantum computer 200. The execution result is a measurement result (expectation value) of a qubit state.

Step S15: The quantum computation control unit 130 determines whether to apply the method 1 as the noise and fidelity estimation method. An estimation method to be applied may be set in the quantum computation control unit 130 in advance or may be included in the computation request received by the computation request receiving unit 110. If it is determined that the estimation method to be applied is the method 1, the quantum computation control unit 130 executes step S16. If the quantum computation control unit 130 determines that the estimation method is not the method 1, the quantum computation control unit 130 executes step S18.

Step S16: The quantum computation control unit 130 estimates expectation values in the state where the number of SX gates is zero, by linear extrapolation, for example, as illustrated in FIG. 9, in order to execute the estimation of the method 1.

Step S17: The quantum computation control unit 130 estimates the fidelity of one R_{ZX}(θ) gate from the approximate curve obtained, as illustrated in FIG. 9, from the estimation results of the expectation values in the state where the number of SX gates is zero for the quantum circuits with the corresponding numbers of repetitions (m).

Step S18: The quantum computation control unit 130 estimates the fidelity of the R_{ZX}(θ) gate for each different number of SX gates as illustrated in FIG. 15, for example, in order to execute the estimation of the method 2.

Step S19: The quantum computation control unit 130 estimates the fidelity in the state where the number of SX gates is zero, from the approximate straight line obtained, as illustrated in FIG. 15, from the estimation results of the fidelity for the different numbers of SX gates.

Step S20: The estimation result is output, and the process is completed. For example, the computation request receiving unit 110 may display the estimation result on the monitor 21 or may transmit the estimation result to the terminal device 30.

Although the embodiments have been illustrated above, the configuration of each unit described in the embodiments may be replaced with another configuration having the same function. Any other components or steps may be added. Furthermore, any two or more configurations (features) of the above-described embodiments may be combined.

In one aspect, it is possible to reduce the impact of noise of a single-qubit gate in the noise measurement of a quantum gate.

In any of the above aspects, the various features may be implemented in hardware, or as software modules running on one or more processors/computers.

The present invention also provides a computer program or a computer program product comprising instructions which, when executed by a computer, cause the computer to carry out any of the methods/method steps described herein, and a (non-transitory) computer-readable medium comprising instructions which, when executed by a computer, cause the computer to carry out any of the methods/method steps described herein. A computer program embodying the present invention may be stored on a (non-transitory) computer-readable medium, or it could, for example, be in the form of a signal such as a downloadable data signal provided from an Internet website, or it could be in any other form.

## Claims

1. A computer program that causes a computer to perform a process comprising:
generating a plurality of first quantum circuits (3a1 to 3am) each including a quantum gate (2) serving as a target of noise measurement and a plurality of single-qubit gates for performing a twirling operation, the plurality of first quantum circuits differing from each other in a number of repetitions of a gate operation of the quantum gate;
generating a plurality of second quantum circuits (4a1 to 4an, 4b1 to 4bn) for each of the plurality of first quantum circuits, the plurality of second quantum circuits being quantum circuits that implement a same unitary operation and differ from each other in a number of first single-qubit gates among the plurality of single-qubit gates;
causing a quantum computer (1) to execute the plurality of second quantum circuits; and
estimating noise of the quantum gate in a state where no first single-qubit gate is included, by extrapolation based on execution results of the plurality of second quantum circuits.

2. The computer program according to claim 1, wherein the first single-qubit gate is an SX gate.

3. The computer program according to claim 1 or 2, wherein the quantum gate serving as the target of noise measurement is a two-qubit gate.

4. The computer program according to any of the preceding claims, wherein
the quantum computer includes a qubit device using a superconducting qubit, and
the quantum gate serving as the target of noise measurement is an R_{ZX} gate.

5. The computer program according to any of the preceding claims, wherein the generating of the plurality of second quantum circuits includes
converting a second single-qubit gate among the plurality of single-qubit gates into a first gate sequence of five quantum gates in a following order: a first R_{Z} gate, a first SX gate, a second R_{Z} gate, a second SX gate, and a third R_{Z} gate, and
integrating three quantum gates that are the first R_{Z} gate, the first SX gate, and the second R_{Z} gate or three quantum gates that are the second R_{Z} gate, the second SX gate, and the third R_{Z} gate into a third single-qubit gate, and then converting the third single-qubit gate into a second gate sequence of five quantum gates in a following order: a fourth R_{Z} gate, a third SX gate, a fifth R_{Z} gate, a fourth SX gate, and a sixth R_{Z} gate.

6. The computer program according to any of the preceding claims, wherein the process further includes
estimating, for each number of repetitions, a first expectation value in the state where no first single-qubit gate is included, from a relationship between a number of first single-qubit gates and an expectation value of the qubit state based on the execution results, and
estimating a fidelity of the quantum gate from a relationship between the each number of repetitions and the first expectation value.

7. The computer program according to any of the preceding claims, wherein the process further includes
estimating, for each number of first single-qubit gates, a first fidelity of the quantum gate from a relationship between the number of repetitions and an expectation value of the qubit state based on the execution results, and
estimating a second fidelity of the quantum gate in the state where no first single-qubit gate is included, from a relationship between the each number of first single-qubit gates and the first fidelity.

8. A quantum gate noise measurement method executed by a computer, the quantum gate noise measurement method comprising:
generating a plurality of first quantum circuits (3a1 to 3am) each including a quantum gate (2) serving as a target of noise measurement and a plurality of single-qubit gates for performing a twirling operation, the plurality of first quantum circuits differing from each other in a number of repetitions of a gate operation of the quantum gate;
generating a plurality of second quantum circuits (4a1 to 4an, 4b1 to 4bn) for each of the plurality of first quantum circuits, the plurality of second quantum circuits being quantum circuits that implement a same unitary operation and differ from each other in a number of first single-qubit gates among the plurality of single-qubit gates;
causing a quantum computer (1) to execute the plurality of second quantum circuits; and
estimating noise of the quantum gate in a state where no first single-qubit gate is included, by extrapolation based on execution results of the plurality of second quantum circuits.

9. An information processing apparatus comprising:
processing means (12) for:
generating a plurality of first quantum circuits (3a1 to 3am) each including a quantum gate (2) serving as a target of noise measurement and a plurality of single-qubit gates for performing a twirling operation, the plurality of first quantum circuits differing from each other in a number of repetitions of a gate operation of the quantum gate;
generating a plurality of second quantum circuits (4a1 to 4an, 4b1 to 4bn) for each of the plurality of first quantum circuits, the plurality of second quantum circuits being quantum circuits that implement a same unitary operation and differ from each other in a number of first single-qubit gates among the plurality of single-qubit gates;
causing a quantum computer to execute the plurality of second quantum circuits; and
estimating noise of the quantum gate in a state where no first single-qubit gate is included, by extrapolation based on execution results of the plurality of second quantum circuits.
